Europäisches Patentamt

European Patent Office

Office européen des brevets

(19)

(11) Veröffentlichungsnummer: **0 180 694**
**B1**

(12)
# EUROPÄISCHE PATENTSCHRIFT

(45) Veröffentlichungstag der Patentschrift:
**13.07.88**

(51) Int. Cl.⁴: **B 65 D  88/56,** B 65 G  65/23

(21) Anmeldenummer: **84850339.7**

(22) Anmeldetag: **01.11.84**

(54) **Vorrichtung zur automatischen Auslösung eines selbstkippenden Behälters.**

(43) Veröffentlichungstag der Anmeldung:
**14.05.86 Patentblatt 86/20**

(45) Bekanntmachung des Hinweises auf die Patenterteilung:
**13.07.88 Patentblatt 88/28**

(84) Benannte Vertragsstaaten:
**AT BE FR GB NL SE**

(56) Entgegenhaltungen:
**DE - A - 2 216 507**
**DE - A - 3 217 561**
**GB - A - 1 580 197**

(73) Patentinhaber: **PETTERSSON & MÖLLER I BJUV AB, N. Storgatan 37, S-267 00 Bjuv (SE)**

(72) Erfinder: **Wennerberg, Kenth, Lilla Torggatan 8, S-262 00 Ängelholm (SE)**

(74) Vertreter: **Rostovanyi, Peter et al, AWAPATENT AB Box 5117, S-200 71 Malmö (SE)**

## Beschreibung

Die Erfindung betrifft eine Vorrichtung zur automatischen Auslösung eines selbstkippenden Behälters, der auf einem Untergestell angebracht und beispielsweise mittels eines Gabelstaplers an einer Kippstelle hebbar ist, wobei der Behälter teils ein erstes Verriegelungsglied, das den Behälter in nicht gekippter Lage durch Eingriff mit einem zweiten Verriegelungsglied am Untergestell hält, teils ein am Vorderteil des Untergestells montiertes Auslöseglied, das beim Kippen des Behälters an der Kippstelle von einem Gegenstand betätigt wird, und teils ein mit dem Auslöseglied verbundenes, stangenförmiges, federbelastetes Betätigungsglied besitzt.

Die Erfindung bezieht sich insbesondere auf solche selbstkippenden Behälter, die auf einem Untergestell mit Gabelführungskanälen angebracht sind und mit Gabelstaplern zum Transport von Gut und dessen Kippen in einen grösseren Container gehoben werden. Die bekannten, selbstkippenden Behälter sind von Hand ausgelöst worden, d.h. der Fahrer des Gabelstaplers hat zum Kippen des Behälters einen Hebel od. dgl. betätigen müssen. Der Auslösemechanismus kann derart angebracht sein, dass ihn der Fahrer des Gabelstaplers vom Inneren der Kabine aus erreicht. Der Nachteil dieser Konstruktion liegt darin, dass der Fahrer seine Aufmerksamkeit zwischen der Bedienung des Gabelstaplers und der Bedienung des Auslösemechanismus teilen muss.

In unserer schwedischen Patentanmeldung 8 102 992-8 (DE-A-3 217 561) haben wir dieses Problem durch eine Vorrichtung gelöst, die eine mit der Vorderkante des Untergestells gelenkig verbundene Klappe besitzt. Falls der Gabelstapler mit dem Behälter gegen ein Hindernis an der Kippstelle gefahren wird, wird ein den Behälter aufrecht haltender Verriegelungsmechanismus ausgelöst, um den Behälter zu kippen.

Der vorliegenden Erfinfung liegt die Aufgabe zugrunde, die Vorrichtung gemäss unserer früheren schwedischen Patentanmeldung weiterzuentwickeln und eine Vorrichtung zu schaffen, die in ihrer Konstruktion einfacher und in der Herstellung billiger ist.

Eine weitere Aufgabe ist es, die Vorrichtung mit einer manueller Auslösevorrichtung zu kombinieren.

Diese Aufgaben werden durch eine Vorrichtung zur automatischen oder manuellen Auslösung eines selbstkippenden Behälters erreicht, und die Merkmale dieser Vorrichtung gehen aus den kennzeichnenden Teilen der nachstehenden Patentansprüche hervor.

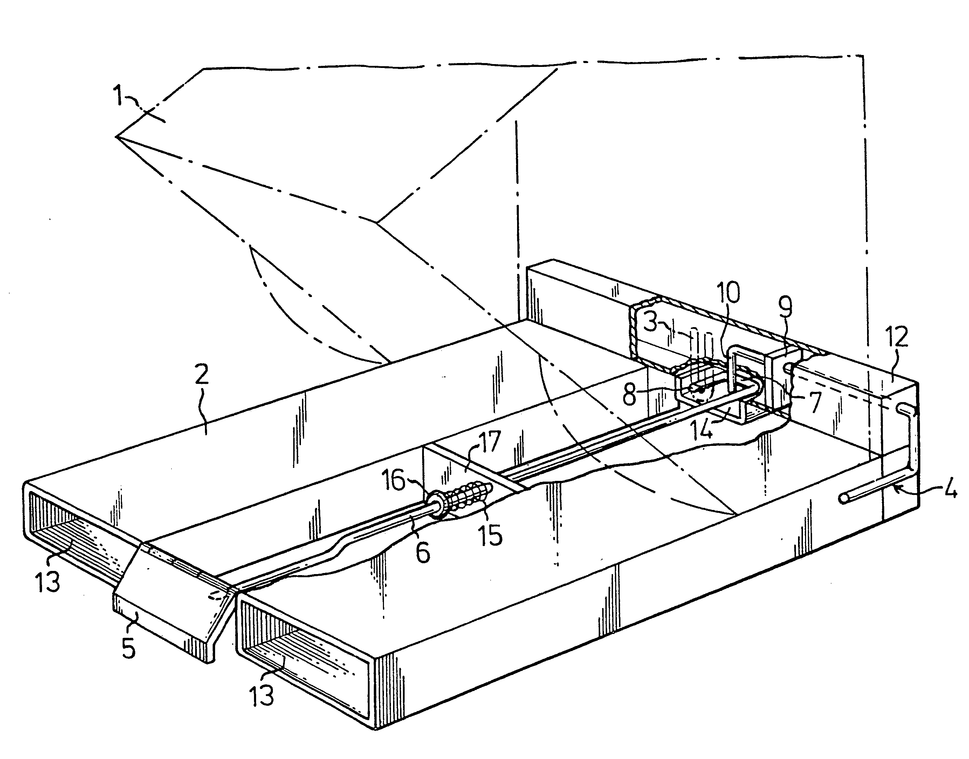

Die Erfindung ist im folgenden anhand eines Ausführungsbeispiels unter Hinweis auf die beigefügte Zeichnung näher beschrieben, die in perspektivischer Ansicht einen Behälter auf einem Untergestell zeigt, das die Vorrichtung gemäss einer Ausführungsform der vorliegenden Erfindung umfasst.

Die Zeichnung zeigt mit strichpunktierten Linien einen Behälter 1, der auf einem Untergestell 2 angebracht ist. Der Schwerpunkt des Behälters ist so gewählt, dass ein mit Gut gefüllter Behälter bestrebt ist, auf dem Untergestell zum Ausschütten des Guts nach vorn zu kippen, und dass ein leerer Behälter in die Ruhelage zurückkehrt. An der Hinterwand des Behälters 1 ist ein erstes Verriegelungsglied oder Verriegelungsbügel 3 festgeschweisst. In der Ruhelage befindet sich dieser Verriegelungsbügel zwischen der genannten Hinterwand und einem Kastenträger 12, der am Untergestellt befestigt ist und sich längs dessen hinterer Kante erstreckt. Der Behälter 1 wird in aufrechter Lage von einer hakenförmigen Stange 6 gehalten, deren Vorderende mit einer an der Vorderkante des Untergestells angelenkten Klappe 5 verbunden ist, und deren anderes, hakenförmiges Ende sich unter dem Kastenträger 12 befindet. Es sei bemerkt, dass sich die Klappe 5 zwischen den beiden Gabelführungskanälen 13 des Untergestells erstreckt, und dass das hakenförmige Ende von unten her von einem an der Unterseite des Kastenträgers befestigten U-Profil 14 geschützt ist. Eine Rückstellfeder 15 ist an der hakenförmigen Betätigungsstange 6 angebracht und zwischen einem Anschlagteller 16 auf der Betätigungsstange und einer Platte 17 eingespannt, die sich zwischen den Gabelführungskanälen erstreckt und eine Bohrung zur gleitverschiebbaren Aufnahme der Betätigungsstange 6 besitzt. Bei unbetätigter Klappe 5 drückt die Feder die Betätigungsstange 6 vorwärts gegen die Vorderkante des Untergestells und übt somit die Funktion einer Druckfeder aus. In dieser unbetätigten Stellung befindet sich der hakenförmige Teil 7 der Betätigungsstange in einer vorderen Lage, und bei aufrechtem Behälter erstreckt sich das freie Ende des hakenförmigen Teils durch den Verriegelungsbügel 3 am Behälter, um dessen Kippen zu verhindern.

Beim automatischen Kippen des Behälters 1 wird der Behälter mittels des Gabelstaplers gegen ein Hindernis an der Kippstelle gefahren, so dass die Klappe 5 gegen das Untergestellt geklappt wird, und dies führt seinerseits dazu, dass der hakenförmige Teil 7 der Betätigungsstange 6 nach hinten im U-Profil 14 aus dem Verriegelungsbügel 3 herausgeschoben wird, so dass der Behälter gekippt werden kann. Wenn die Klappe 5 nicht länger vom Hindernis an der Kippstelle betätigt wird, wird die Betätigungsstange mittels der Rückstellfeder 15 vorwärts geschoben. Wenn dann der Behälter 1 entleert ist und infolge der Wahl des Schwerpunkts im Behälter automatisch in die aufrechte Lage zurückkehrt, wird der Verriegelungsbügel 3 das freie Ende des hakenförmigen Teils 7 etwas nach hinten drücken, so dass der hakenförmige Teil erneut in den Verriegelungsbügel einschnappen kann. Um dieses Einschnappen zu erleichtern, hat das freie Ende des hakenförmigen Teils eine Kammfläche 8.

Es sei bemerkt, dass der Behälter 1 nicht ausgelöst werden kann, wenn das Untergestell auf dem Boden steht, da die Klappe 5 höher ist als das Untergestell, weshalb die Klappe nicht gegen das Untergestell geklappt werden kann, wenn dieses auf dem Boden steht.

Wie schon erwähnt ist diese automatische Auslösevorrichtung mit einer Vorrichtung zum manuellen Kippen des Behälters kombiniert. Diese Vorrichtung besteht aus einem Hebel 4, der einen stangenförmigen, sich ausserhalb des Untergestells befindenden Griffteil und einen sich innen im Kastenträger 12 befindenden, stangenförmigen Betätigungsteil besitzt.

Der Betätigungsteil erstreckt sich in Längsrichtung des Kastenträgers durch eine innen im Kastenträger befestigte Platte 9 und endet in einem rechtwinklig gebogenen Ende 10, das sich durch eine nicht gezeigte Ausnehmung in der Unterseite des Kastenträgers zum hakenförmigen Teil 7 der Betätigungsstange hinunter erstreckt. Will man den Behälter 1 von Hand kippen, wird der Griffteil des Hebels 4 nach unten geführt, wobei das Ende 10 nach hinten gegen den hakenförmigen Teil 7 der Betätigungsstange 6 geschwenkt wird und diesen Teil mit dem Verriegelungsbügel 3 ausser Eingriff führt.

## Patentansprüche

1. Vorrichtung zur automatischen Auslösung eines selbstkippenden Behälters (1), der auf einem Untergestell (2) angebracht und beispielsweise mittels eines Gabelstaplers an einer Kippstelle hebbar ist, wobei der Behälter teils ein erstes Verriegelungsglied (3), das den Behälter in nicht gekippter Lage durch Eingriff mit einem zweiten Verriegelungsglied (7) am Untergestell hält, teils ein am Vorderteil des Untergestells (2) montiertes Auslöseglied (5), das beim Kippen des Behälters an der Kippstelle von einem Gegenstand betätigt wird, und teils ein mit dem Auslöseglied verbundenes, stangenförmiges, federbelastetes Betätigungsglied (6) besitzt, dadurch gekennzeichnet, dass das zweite Verriegelungsglied ein hakenförmiges Ende (7) des Betätigungsgliedes (6) ist, wobei das hakenförmige Ende bei Betätigung des Auslösegliedes (5) durch den genannten Gegenstand nit dem ersten Verriegelungsglied (3) ausser Eingriff geführt wird.

2. Vorrichtung nach Anspruch 1, dadurch gekennzeichnet, dass das hakenförmige Ende (10) eine schräge Kammfläche (8) hat, die ein Einschnappen des hakenförmigen Endes bei in die Ruhelage zurückgeführtem Behälter erleichtert.

3. Vorrichtung nach Anspruch 1 oder 2, dadurch gekennzeichnet, dass das Auslöseglied eine mit dem Untergestell (2) gelenkig verbundene Klappe (5) ist.

4. Vorrichtung nach Anspruch 1, gekennzeichnet durch eine manuelle Auslösevorrichtung (4), die einen Griffteil und einen Betätigungsteil besitzt, der bei Betätigung des Griffteils das hakenförmige Ende (7) mit dem ersten Verriegelungsglied (3) ausser Eingriff führt.

5. Vorrichtung nach Anspruch 4, dadurch gekennzeichnet, dass die manuelle Auslösevorrichtung die Form einer gebogenen Stange (4) hat, deren eines Ende den Griffteil und deren anderes Ende den Betätigungsteil bildet.

## Revendications

1. Dispositif pour le déclenchement automatique d'un récipient autobasculant (1) qui est agencé sur un bâti inférieur (2) et qui peut être levé, par exemple au moyen d'un élévateur à fourche, à un poste de basculement, le récipient possédant pour partie un premier organe de verrouillage (3) qui, par engagement avec un deuxième organe de verrouillage (7), maintient le récipient en position non basculée sur le bâti inférieur, pour partie un organe de déclenchement (5) qui est monté à la partie avant du bâti inférieur (2) et qui, lors du basculement du récipient au poste de basculement, est actionné par un objet, et pour partie un organe d'actionnement (6) en forme de tige, chargé par ressort, reliée à l'organe de déclenchement, caractérisé par le fait que le deuxième organe de verrouillage est une extrémité en forme de crochet (7) d l'organe d'actionnement (6), l'extrémité en forme de crochet étant dégagée du premier organe de verrouillage (3) lors de l'actionnement de l'organe de déclenchement (5) par ledit objet.

2. Dispositif selon revendication 1, caractérisé par le fait que l'extrémité (10) en forme de crochet possède une surface de came oblique (8) qui facilite un eclenchement de l'extrémité en forme de crochet lorsque le récipient est ramené à la position de repos.

3. Dispositif selon revendication 1 ou 2, caractérisé par le fait que l'organe de déclenchement est un volet (5) lié par articulation au bâti inférieur (2).

4. Dispositif selon revendication 1, caractérisé par un dispositif de déclenchement manuel (4) qui possède une partie poignée et une partie actionnement, laquelle, lors de l'actionnement de la partie poignée, dégage du premier organe de verrouillage (3) l'extrémité (7) en forme de crochet.

5. Dispositif selon revendication 4, caractérisé par le fait que le dispositif de déclenchement manuel possède la forme d'une tige coudée (4) dont une extrémité forme la partie poignée et dont l'autre extrémité forme la partie actionnement.

## Claims

1. A device for the automatic disengagement of a self-tipping container (1) which is placed on a base (2) and can be lifted, for example by means of a forklift truck, at a discharge site, said container having a first latch means (3) which holds the container in non-tipped position by engagement with a second latch means (7) on the base (2), a release means (5) which is mounted on the front part of the base (2), and which, upon tipping of the container at the discharge site, is actuated by an object, and a rod-shaped spring-biased actuating means (6) connected with said release means (6), characterised in that said second latch means is a hook-shaped end (7) of the actuating means (6), said hook-shaped end, upon actuation of said release means (5) by the said object, being moved out of engagement with said first latch means (3).

2. A device as claimed in claim 1, characterised in that the hook-shaped end (10) has an oblique camming surface (8) to facilitate snapping-in of the hook-shaped end when the container has returned to resting position.

3. A device as claimed in claim 1 or 2, characterised in that said release means is a flap (5) hingedly connected with the base (2).

4. A device as claimed in claim 1, characterised by a manual disengagement device (4) having a handle portion and an actuating portion which, upon actuation of said handle portion, moves the hook-shaped end (7) out of engagement with said first latch means (3).

5. A device as claimed in claim 4, characterised in that the manual disengagement device is in the form of a bent rod (4), one end of which forms the handle portion and the other end of which forms the acuating portion.